# EUROPÄISCHE PATENTANMELDUNG

(11) **EP 2 522 810 A1**
(43) Veröffentlichungstag der Anmeldung: **14.11.2012**
(21) Anmeldenummer: 11165794.6
(22) Anmeldetag: 12.05.2011
(51) Int. Cl.: F01D 5/28, F01D 5/16, F01D 5/18, B22F 3/105, B22F 5/04, B29C 67/00, B29C 70/74

(54) **Verfahren zum generativen Herstellen eines Bauteils, insbesondere eines Verdichterschaufelelements, sowie ein derartiges Bauteil**

(71) Anmelder: MTU Aero Engines GmbH, 80995 München (DE)
(72) Erfinder: Neuhäusler, Stefan, 86672 Thierhaupten (DE); Satzger, Wilhelm, 80804 München (DE); Sikorski, Siegfried, 80997 München (DE); Dr. Dusel, Karl-Heinz, 85716 Unterschleißheim (DE); Melzer, Hans-Christian, 85305 Hetzendorf (DE); Heß, Thomas, 81541 München (DE)

(57) **Zusammenfassung**

Die Erfindung betrifft ein Bauteil und ein Verfahren zum generativen Herstellen, Reparieren und/oder Austauschen dieses Bauteils, insbesondere eines Schaufelelements, wobei das Verfahren die folgenden Schritte aufweist: Ausbilden des Bauteils (1) mit wenigstens einem Hohlraum (3) und wenigstens einer Öffnung (10) zum Entleeren des Hohlraums mittels eines generativen Fertigungsverfahrens, z.B. mittels Lasersintern; Entleeren von in dem Hohlraum während des generativen Aufbaus des Bauteils nicht verfestigten Pulvers; und Einbringen wenigstens eines Kerns (2) in den Hohlraum, wobei der Kern den Holraum zumindest teilweise ausfüllt.
Das Vorsehen von zusätzlichen Haken (6) an der Innenwand (5) des Hohlraums verbessert die Verbindung zwischen dem Kern und dem Bauteil.

## Beschreibung

Die vorliegende Erfindung betrifft ein Verfahren zum generativen Herstellen, Reparieren und/oder Austauschen eines Bauteils, insbesondere eines Schaufelelements eines Verdichters, sowie ein derartiges Bauteil.

Kleine Verdichterschaufeln im Verdichter, welche eine Höhe von beispielsweise bis zu ca. 30 cm aufweisen, werden heute komplett aus Metall gefertigt. Solche kleinen Schaufeln aus Schmiedewerkstoff können nicht oder wenn, dann nur unter sehr großem Aufwand hohl hergestellt werden, um in dem Hohlraum ein dämpfendes Element einzubringen.

Des Weiteren ist aus dem Stand der Technik, wie er in der US 7 429 165 B2 offenbart ist, eine Hybridschaufel bekannt. Die Hybridschaufel wird dabei mit Aussparungen ausgebildet, welche mit einem Kohlfaserverbundmaterial gefüllt werden. Dabei wird der Hauptkörper oder der Metallbereich der Schaufel mit den Aussparungen geschmiedet, gegossen oder stranggepresst.

Vor diesem Hintergrund liegt der Erfindung nun die Aufgabe zugrunde, ein verbessertes Verfahren zum Herstellen bzw. Ausbilden, Reparieren und/oder Austauschen eines Bauteils bereitzustellen, sowie ein verbessertes Bauteil.

Gemäß der Erfindung wird ein Verfahren zum generativen Herstellen, Reparieren und/oder Austauschen eines Bauteils, insbesondere eines Schaufelelements, bereitgestellt, wobei das Verfahren die folgenden Schritte aufweist: Ausbilden des Bauteils mit wenigstens einem Hohlraum und wenigstens einer Öffnung zum Entleeren des Hohlraums mittels eines generativen Fertigungsverfahrens; Entleeren von in dem Hohlraum während des generativen Aufbaus des Bauteils nicht verfestigten Pulvers; und Einbringen wenigstens eines Kerns in den Hohlraum, wobei der Kern den Holraum zumindest teilweise ausfüllt.

Das Verfahren hat den Vorteil, dass das Bauteil sehr einfach mit dem Hohlraum durch das generative Fertigungsverfahren hergestellt werden kann. Des Weiteren kann der Hohlraum teilweise oder vollständig mit wenigstens einem Kern aus wenigstens einem Faserverbundwerkstoff gefüllt werden, wodurch das Bauteil leichter wird.

Des weiteren wird erfindungsgemäß ein generativ hergestelltes oder gefertigtes Bauteil bereitgestellt, insbesondere ein Schaufelelement, wobei das Bauteil wenigstens einen Hohlraum aufweist, in welchem wenigstens ein Kern aus wenigstens einem Faserverbundwerkstoff vorgesehen ist und, wobei das Bauteil wenigstens eine Öffnung aufweist zum Einführen des wenigstens einen Kerns in das Bauteil.

Vorteilhafte Ausgestaltungen und Weiterbildungen der Erfindung ergeben sich aus den Unteransprüchen sowie der Beschreibung unter Bezugnahme auf die Zeichnungen.

In einer erfindungsgemäßen Ausführungsform weist das Verfahren den Schritt auf des Einbringens eines Faserkerns des wenigstens einen Kerns in den Hohlraum und des anschließenden Einbringens oder Einfüllens eines Polymers, insbesondere eines Harzes oder Kunstharzes, in den Hohlraum zum Verbinden des Polymers mit dem Fasernkern. Das Einbringen zunächst des Faserkerns in den Hohlraum hat den Vorteil, dass dieser leicht verformbar ist und danach nur noch mit dem jeweiligen Matrixmaterial, hier einem Polymer, ausgefüllt werden muss. Dazu kann das Materixmaterial in den Hohlraum eingespritzt werden.

In einer weiteren erfindungsgemäßen Ausführungsform wird die wenigstens eine Öffnung mit dem Matrixmaterial, z.B. dem Kunststoff oder Polymer, direkt verschlossen, in dem man diese in der Öffnung aushärten lässt. Ebenso kann die Öffnung auch mittels jedes anderen geeigneten Verfahrens verschlossen werden z.B. durch Zuschweißen, Zukleben, Zulöten usw..

In einer anderen erfindungsgemäßen Ausführungsform werden an einer Innenwand des Bauteils, welche den Hohlraum umgibt, mittels des generativen Fertigungsverfahrens mehrere Haken oder Widerhaken ausgebildet. Diese Haken haben den Vorteil, dass sie die Verbindung zwischen dem Bauteil und dem jeweiligen Kern aus wenigstens einem Faserverbundwerkstoff verbessern.

Gemäß einer weiteren erfindungsgemäßen Ausführungsform ist das Bauteil als ein Schaufelelement, beispielsweise eines Verdichters oder einer Turbine, ausgebildet. Das Schaufelelement kann dabei zusätzlich mit einem Schaufelfuß integral mittels des generativen Fertigungsverfahrens ausgebildet sein. Hierbei kann der Schaufelfuß außerdem hohl ausgebildet sein mit der Öffnung zum Einführen wenigstens eines Kerns in den Hohlraum des Schaufelelements. Der Schaufelfuß kann dabei an seiner Innenwand ebenfalls zusätzlich mit Haken versehen sein und mit wenigstens einem Kern aus wenigstens einem Faserverbundwerkstoff zumindest teilweise gefüllt werden. Dadurch kann der Schaufelfuß ebenfalls leichter ausgebildet werden und der Hohlraum des Schaufelelements über eine Öffnung des hohlen Schaufelfußes mit wenigstens einem Kern bestückt werden.

Die Erfindung wird nachfolgend anhand der in den schematischen Figuren der Zeichnungen angegebenen Ausführungsbeispiele näher erläutert. Es zeigen:
- Fig. 1: einen Ausschnitt eines Schaufelelements gemäß einer Ausführungsform der Erfindung;
- Fig. 2: eine schematische Schnittansicht eines Schaufelelements mit einem Kern gemäß der Erfindung; und
- Fig. 3: ein Ablaufdiagramm eines Ausführungsbeispiels des erfindungsgemäßen Verfahrens.

In allen Figuren sind gleiche bzw. funktionsgleiche Elemente ― sofern nichts anderes angegeben ist ― mit denselben Bezugszeichen versehen worden.

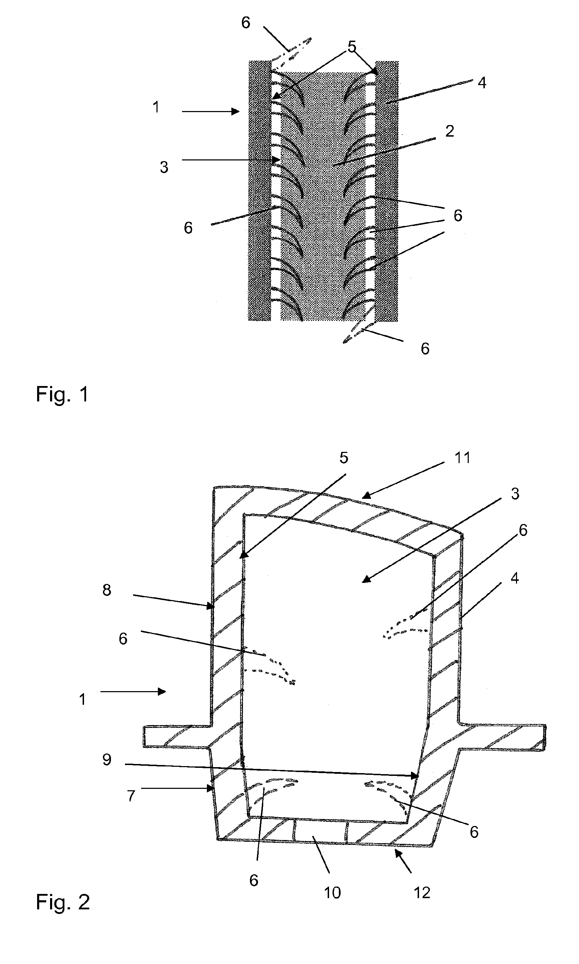

In Fig. 1 ist ein Ausschnitt eines Schaufelelements 1 oder Hybridschaufelelements mit wenigstens einem Kern 2 gemäß einer Ausführungsform der Erfindung gezeigt. Der Ausschnitt ist dabei rein schematisch und stark vereinfacht. Das Schaufelelement 1 weist wenigstens einen Hohlraum 3 auf, in welchem eine Füllung als Kern 2 eingebracht ist. Die Füllung bzw. der Kern 2 weist dabei beispielsweise ein zur Dämpfung und/oder zum Leichtbau des Schaufelelements 1 geeignetes Material oder geeignete Materialkombination auf. In dem in Fig. 1 gezeigten Ausführungsbeispiel besteht die Füllung oder der Kern 2 aus wenigstens einem Faserverbundwerkstoff oder Faserverbundmaterial.

Ein Faserverbundwerkstoff ist im Allgemeinen ein beispielsweise aus zwei Hauptkomponenten bestehender Mehrphasen- oder Mischwerkstoff, wobei der Faserverbundwerkstoff eine einbettende Matrix sowie verstärkende Fasern aufweist. Der Faserverbundwerkstoff kann als Fasern beispielsweise Glasfasern, Kohlenstofffasern, Keramikfasern, Aramidfasern und/oder Metall- bzw. Metalllegierungsfasern, z.B. Stahlfasern usw. aufweisen. Des Weiteren kann als Matrix beispielsweise ein Kunststoff, wie ein Polymer, ein Harz, ein Duromer, ein Thermoplast und/oder ein Elastomer vorgesehen werden, je nach Funktion und Einsatzzweck. Es können als Matrix außerdem auch Metalle bzw. Metalllegierungen, Keramiken als Matrix für nichtspröde keramische Faserverbundwerkstoffe und andere geeignete Werkstoffe und Werkstoffkombinationen eingesetzt werden, je nach Funktion und Einsatzzweck.

Faserverbundwerkstoffe haben den Vorteil, dass sie sowohl bessere Dämpfungseigenschaften als auch ein Leichtbaupotenzial mit sich bringen können.

Das erfindungsgemäße Schaufelelement 1 mit seinem wenigstens einen Hohlraum 3 ist dabei mittels eines generativen Fertigungsverfahren hergestellt. Das generative Fertigungsverfahren hat den Vorteil, dass das Schaufelelement 1 sehr einfach mit einem Hohlraum 3 ausgebildet werden kann, im Gegensatz beispielsweise zum Schmieden.

Der durch die generative Fertigung ausgebildete Hohlraum 3 wird dabei mit wenigstens einem Kern 2 aus wenigstens einem Faserverbundwerkstoff zumindest teilweise oder vollständig ausgefüllt. Auf diese Weise kann der entstandene Hohlraum 3 mit einem Faser-Matrix-Verbund als Füllung gefüllt werden. Hierdurch wird das Schaufelelement 1 langlebiger und leichter. Außerdem ist es möglich, lediglich einen Rahmen 4 bestehend beispielsweise aus Deckbändern und einer Eintrittskante z.B. aus Metall zu fertigen. Der Rest des Schaufelelements 1 kann in diesem Fall komplett aus einem Faserverbundwerkstoff (FVK) oder einer Kombination aus Faserverbundwerkstoffen bestehen.

Wie in dem Ausführungsbeispiel in Fig. 1 gezeigt ist, kann die Innenwand 5 des Schaufelelements 1 oder zumindest ein Teil des Innenwand des Schaufelelements 1, welche den Hohlraum 3 bildet, optional mit einem oder einer Vielzahl von Haken 6 oder Widerhaken versehen werden. Solche Haken 6 oder Widerhaken verbessern die Verbindung der Füllung bzw. des Kerns 2, z.B. einer Fasermatrix, zur Schaufel 1. Durch die generative Fertigung können insbesondere auch kleine Schaufelelemente 1, wie die zuvor beschriebenen Verdichterschaufeln im Verdichter, welche eine Höhe von beispielsweise bis zu ca. 30 cm aufweisen, einfach und kostengünstig hergestellt werden. Die Haken 6 an der Innenwand 5 des Hohlraums 3 des Schaufelelements 1 werden dabei bei der generativen Fertigung des Schaufelelements 1 mit ausgebildet. Die Haken 6 können dabei, wie in dem Ausführungsbeispiel in Fig. 1 gezeigt ist, dieselbe Orientierung aufweisen und in dieselbe Richtung zeigen oder auch unterschiedliche Orientierungen aufweisen und in verschiedene Richtungen zeigen, wie mit einer gestrichelten Linie und einer strichpunktierten Line angedeutet ist. Des Weiteren können die Haken 6 jeweils dieselbe Form aufweisen oder unterschiedliche Formen, wie z.B. mit der gestrichelten Linie in dem Ausführungsbeispiel in Fig. 1 angedeutet ist. Die Erfindung ist auf die gezeigten Formen von Haken 6 nicht beschränkt, sie sind lediglich rein beispielhaft.

Fig. 2 ist eine schematische und stark vereinfachte Schnittansicht eines Schaufelelements 1 gemäß der Erfindung gezeigt, das mit wenigstens einem Kern 2 aus einem Faserverbundwerkstoff oder einer Faserverbundwerkstoffkombination teilweise oder vollständig gefüllt werden kann.

Das Schaufelelement 1 ist dabei beispielsweise eine Laufschaufel eines Verdichters und weist z.B. einen zusätzlichen Schaufelfuß 7 auf.

Ebenso kann das Schaufelelement 1 aber auch eine Leitschaufel sein und statt Teil eines Verdichters auch Teil einer Turbine, z.B. einer Gasturbine eines Flugzeugtriebwerks sein. Bei Leitschaufeln können die Stirnflächen verbreitert ausgebildet sein und die nächstliegenden Leitschaufeln miteinander verbinden zu sog. Clustern.

Das Schaufelelement 1 ist mit wenigstens einem Hohlraum 3 zur Aufnahme wenigstens eines Kerns ausgebildet. In dem in Fig. 2 gezeigten Ausführungsbeispiel weist das Schaufelelement 1 außerdem einen Schaufelfuß 7 auf, welcher ebenfalls hohl ausgebildet ist und mit dem Hohlraum 3 des Schaufelelements 1 vorzugsweise verbunden ist zum Einführen des wenigstens einen Kerns aus einem Faserverbundwerkstoff oder einer Faserverbundwerkstoffkombination. In dem in Fig. 2 gezeigten Querschnitt eines erfindungsgemäßen Schaufelelements 1 gemäß einem Ausführungsbeispiel kann z.B. ein Rahmen 4 des Schaufelelements 1 durch die generative Fertigung hergestellt werden. Der Rahmen 4 bildet dabei die Schaufelkontur, welcher z.B. eine Eintrittskante 8 aufweist, sowie den Schaufelfuß 7. Innen ist der Rahmen 7 hohl oder weist einen Hohlraum 3 auf, wie in dem Ausführungsbeispiel in Fig. 2 gezeigt ist. Dabei können, wie in Fig. 2 mit einer gepunkteten Linie angedeutet ist, an der Innenwand 5 des Hohlraums 3 mehrere zusätzliche Haken 6 oder Widerhaken ausgebildet sein. Diese Haken 6 oder Widerhaken können zusätzlich oder alternativ auch an der Innenwand 9 des hohlen Schaufelfuß 7 vorgesehen werden, wie in Fig. 2 mit einer gestrichelten Linie angedeutet ist.

Der Rahmen 4 des Schaufelelements 1 weist wenigstens eine Öffnung 10 oder einen Zugang zu dem Hohlraum 3 auf, zum Entfernen des nicht verfestigten Pulvers aus dem generativen Fertigungsverfahren. In dem in Fig. 2 gezeigten Ausführungsbeispiel, ist z.B. an der Stirnseite 11 des Schaufelfußes 7 des Schaufelelements 1 die Öffnung 10 vorgesehen, da hier der Querschnitt des Schaufelelements 1 am größten ist. Über diese Öffnung 10 wird einerseits, das während der generativen Fertigung nicht verfestigte Pulver entfernt oder entleert und andererseits der so geschaffene Hohlraum 3 mit dem wenigstens einem Kern aus einem Faserverbundwerkstoff (FVK) oder einer Faserverbundwerkstoffkombination später gefüllt.

Zum Einführen des Kerns in den Hohlraum 3 des Schaufelelements 1 kann beispielsweise auch statt oder zusätzlich zu der Öffnung 10 in dem hohlen Schaufelfuß 7 an der anderen Stirnseite des Schaufelelements 1 wenigstens eine Öffnung vorgesehen sein (nicht dargestellt), z.B. eine kleinere Öffnung, um einen Harzfluss zu gewährleisten und um das Einziehen der Fasern zu erleichtern beim Ausbilden des Faserverbundwerkstoffs aus den Fasern und dem Harz. Die Öffnung 10 oder die Öffnungen können anschließend geeignet verschlossen werden z.B. durch Zuschweißen, Zukleben, Zulöten usw., sie müssen aber nicht notwendigerweise zusätzlich verschlossen werden, da das Harz im Bereich der Öffnung 10 aushärtet und damit der Hohlraum 3 automatisch verschlossen werden kann.

Zum Versehen des Hohlraums 3 des Schaufelelements 1 mit wenigstens einem Kern aus wenigstens einem Faserverbundwerkstoff wird der Hohlraum 3 des Schaufelelements 1 zunächst beispielsweise mit einem Faserkern wegen der leichteren Verformbarkeit in den Hohlraum 3 eingeführt. Anschließend wird der Faserkern mit Harz ausgespritzt oder ausgefüllt zur Bildung des Faserverbundwerkstoffs. Statt einem Harz kann, wie zuvor beschrieben, auch jeder andere Werkstoff oder Werkstoffkombination eingesetzt werden, die als Matrix für einen Faserverbundwerkstoff geeignet ist. Ebenso kann auch statt zunächst einen Faserkern in den Hohlraum 3 einzuführen auch bereits der vollständige Faserverbundwerkstoff in den Hohlraum 3 eingeführt werden.

Das Vorsehen von zusätzlichen Haken 6 oder Widerhaken an der Innenwand 5 des Hohlraums 3 des Schaufelelements 1 verbessert die Verbindung zwischen der Füllung bzw. dem Kern und der Schaufel 1.

In alternativen Ausführungsformen der Erfindung kann auch der Hohlraum 3 des Schaufelfußes 7 des Schaufelelements 1 optional mit zusätzlichen Haken 6 versehen sein, wie in dem Ausführungsbeispiel in Fig. 2 mit einer gestrichelten Linie angedeutet ist. Außerdem kann der Hohlraum 3 des Schaufelfußes 7 des Schaufelelements 1 zusätzlich mit wenigstens einem Kern aus wenigstens einem Faserverbundwerkstoff versehen werden. Der Faserverbundwerkstoff des Kerns des Schaufelfußes 7 kann dabei identisch oder verschieden von dem wenigstens einen Faserverbundwerkstoff des wenigstens einen Kerns im Hohlraum 3 des Schaufelelements 1 sein. Dies gilt für alle Ausführungsformen der Erfindung. Ebenso kann der Schaufelfuß 7 hohl oder massiv ausgebildet sein. In dem Fall, dass der Schaufelfuß 7 massiv ausgebildet ist oder hohl und nicht mit dem Hohlraum 3 des Schaufelelements 1 verbunden ist, kann wenigstens eine Öffnung (nicht dargestellt) zum Einführen wenigstens eines Kerns in den Hohlraum 3 des Schaufelelements 1 an der oberen Stirnseite 12 des Schaufelelements 1 vorgesehen werden oder an einer anderen geeigneten Position des Schaufelelements 1, die ein Entfernen des nicht verfestigten Pulvers im Hohlraum 3 des Schaufelelements 1 erlaubt und ein anschließendes Befüllen des Hohlraums 3 mit wenigstens einem Kern aus wenigstens einem Faserverbundwerkstoff.

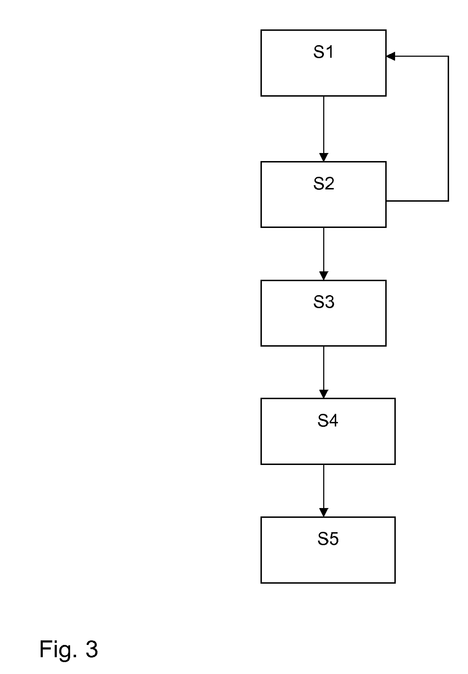

Fig. 3 zeigt ein Ablaufdiagramm eines Ausführungsbeispiels eines erfindungsgemäßen Verfahrens zur Fertigung eines Schaufelelements mit wenigstens einem Kern gemäß der Erfindung.

Das Schaufelelement wird dabei mit wenigstens einem Hohlraum und optional wenigstens einem oder mehreren zusätzlichen Haken an der Innenwand des Schaufelelements, die den Hohlraum umgibt, mittels eines generativen Fertigungsverfahrens schichtweise aufgebaut. Außerdem wird das Schaufelelement in dem Ausführungsbeispiel in Fig. 3 zusätzlich mit einem hohlen Schaufelfuß ausgebildet, der mit dem Hohlraum des Schaufelelements verbunden ist und wenigstens eine Öffnung zum Entleeren des nicht verfestigten Pulvers und zum späteren Einführen des wenigstens einen Kerns aufweist.

Beispiele für generative Herstellungsverfahren die zur Herstellung des Schaufelelements, mit wenigstens einem Hohlraum und an der Wand des Hohlraums vorgesehenen Haken, eingesetzt werden können, sind z.B. das sog. Rapid Manufacturing und das sog. Rapid Prototyping. Bei der generativen Fertigung wird das Schaufelelement mit einem Hohlraum und Haken an der Innenwand des Hohlraums schichtweise durch Materialauftrag aufgebaut. Dabei wird bei den entsprechenden generativen Verfahren, die als Lasersintern, Selective Laser Sintering (SLS), Elektronenstrahlsintem, Electron Beam Melting (EBM), LaserCusing, Selective Laser Melting (SLM) oder 3D-Printing bekannt sind, der hinzuzufügende oder aufzutragende Werkstoff in Pulverform verarbeitet, beispielsweise ein Pulver aus wenigstens einem Metall und/oder einer Metalllegierung. Die Erfindung ist auf die genannten generativen Herstellungsverfahren, sowie ein Pulver aus wenigstens einem Metall oder wenigstens einer Metalllegierung nicht beschränkt.

Dabei wird das Pulver schichtweise z.B. auf eine Bauplattform aufgetragen (Schritt S1) und die jeweilige Pulverschicht anschließend jeweils selektiv verfestigt zum Ausbilden eines entsprechenden Bauteilbereichs des Schaufelelements mit seinem hohlen Schaufelfuß, dem wenigstens einen Hohlraum des Schaufelelements und den an der Innenwand des Schaufelelements, welche den Hohlraum bildet, vorgesehenen Haken.

Das Verfestigen der Pulverschicht erfolgt dabei mittels einer Energiestrahlung einer Energiestrahlungsquelle (Schritt S2), wie z.B. mittels eines Laserstrahls eines Lasers und/oder eines Elektronenstrahls einer Elektronenstrahlquelle. Der Schritt des Auftragens der Pulverschicht und der Schritt des anschließenden Verfestigens des Bauteilbereichs der Pulverschicht mittels Energiestrahlung zur Ausbildung des Schaufelelements und seines Hohlraums mit den Haken, sowie des hohlen Schaufelfußes wird so lange wiederholt bis am Ende alle Bauteilschichten verfestigt wurden und das Schaufelelement mit seinem Hohlraum und den Haken sowie dem Schaufelfuß vollständig aufgebaut ist (Schritt S3). Das nicht verfestigte Pulver wird dabei durch die Öffnung am Schaufelfuß entleert, um den Hohlraum in dem Schaufelelement und dem Schaufelfuß freizulegen (Schritt S4).

Die selektive Verfestigung bzw. die Verfestigung des jeweiligen Bauteilbereichs der Pulverschicht erfolgt z.B. auf Basis von Geometriedaten des herzustellenden Schaufelelements. Hierbei kann der Bereich der Pulverschicht z.B. abgescannt oder auf eine andere geeignete Weise bestimmt oder vorgegeben werden und der zu der entsprechenden Bauteilschicht gehörende Abschnitt der Pulverschicht mittels Energiestrahlung verfestigt werden. Durch Einwirken der Energiestrahlung schmilzt oder versintert das Pulver in diesem Bereich. Im Fall des 3D-Printings wird die Pulverschicht verfestigt, indem ein Binder selektiv in die zum Bauteil gehörenden Bereiche eingebracht wird. Anschließend kann beispielsweise die Bauplattform um eine Schichtdicke verfahren, z.B. abgesenkt, werden. Daraufhin wird eine neue Pulverschicht darüber aufgetragen und wiederum der Bauteilbereich des Schaufelelements mittels Energiestrahlung der Energiestrahlungsquelle verfestigt. Auf diese Weise kann Schicht für Schicht das Schaufelelement mit wenigstens einem Hohlraum zur Aufnahme wenigstens eines Kerns aufgebaut werden und optional auch mit einem zusätzlichen hohlen Schaufelfuß ausgebildet werden.

In einem weiteren Schritt (Schritt S5) wird, nachdem das Schaufelelement mit seinem wenigstens einen Hohlraum und dem mit dem Hohlraum verbundenen zusätzlichen hohlen Schaufelfuß ausgebildet ist, das Schaufelelement mit wenigstens einem Kern aus wenigstens einem Faserverbundwerkstoff versehen. Dazu kann beispielsweise zunächst ein Faserkern des Faserverbundwerkstoffs wegen der leichteren Verformbarkeit in den Hohlraum des Schaufelelements eingeführt werden, z.B. über die Öffnung in dem hohlen Schaufelfuß oder eine andere geeignete Öffnung des Schaufelelements. Anschließend wird der Faserkern beispielsweise mit Harz ausgespritzt oder ausgefüllt zum Ausbilden des fertigen Kerns in dem Hohlraum des Schaufelelements aus einem Faserverbundwerkstoff. Der Faserverbundwerkstoff kann dabei den Hohlraum des Schaufelelements teilweise oder vollständig füllen. Die zusätzlich an der Innenwand des Hohlraums des Schaufelelements ausgebildeten Haken verbessern dabei die Verbindung zwischen der Schaufel und dem Kern.

Statt zunächst nur den Faserkern in den Hohlraum einzuführen und dann den Kern mit einer Matrix z.B. aus einem Harz zu versehen, kann auch der Faserverbundwerkstoff komplett in den Hohlraum eingeführt werden, d.h. der mit einem Harz imprägnierte oder getränkte Faserkern.

Wie zuvor beschrieben, kann in alternativen Ausführungsformen der Erfindung auch der Hohlraum des Schaufelfußes des Schaufelelements optional mit zusätzlichen Haken versehen sein, wie in Fig. 2 zuvor mit einer gestrichelten Linie angedeutet wurde. Zudem kann auch der Hohlraum des Schaufelfußes des Schaufelelements zusätzlich mit wenigstens einem Kern aus wenigstens einem Faserverbundwerkstoff versehen werden, wobei der Faserverbundwerkstoff dabei identisch oder verschieden von dem wenigstens einen Faserverbundwerkstoff eines Kerns im Hohlraum des Schaufelelements sein kann. Dies gilt für alle Ausführungsformen der Erfindung. Die Kombination und/oder Anordnung von Kernen aus wenigstens einem Faserverbundwerkstoff in dem Hohlraum des Schaufelelements und/oder dem Hohlraum des Schaufelfußes des Schaufelelements kann beispielsweise abhängig von der Belastung des Schaufelelements gewählt werden.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar. Insbesondere sind die zuvor beschriebenen Ausführungsbeispiele miteinander kombinierbar, insbesondere einzelne Merkmale davon.

### Bezugszeichenliste

- 1: Schaufelelement
- 2: Kern
- 3: Hohlraum
- 4: Rahmen
- 5: Innenwand (Schaufelelement)
- 6: Haken
- 7: Schaufelfuß
- 8: Eintrittskante
- 9: Innenwand (Schaufelfuß)
- 10: Öffnung
- 11: Stirnseite (Schaufelfuß)
- 12: Stirnseite (Schaufelelement)

## Patentansprüche

1. Verfahren zum generativen Herstellen, Reparieren und/oder Austauschen eines Bauteils (1), insbesondere eines Schaufelelements, wobei das Verfahren die folgenden Schritte aufweist:
Ausbilden des Bauteils (1) mit wenigstens einem Hohlraum (3) und wenigstens einer Öffnung (10) zum Entleeren des Hohlraums (3) mittels eines generativen Fertigungsverfahrens;
Entleeren von in dem Hohlraum (3) während des generativen Aufbaus des Bauteils (1) nicht verfestigten Pulvers; und
Einbringen wenigstens eines Kerns (2) in den Hohlraum (3), wobei der Kern (2) den Holraum (3) zumindest teilweise ausfüllt.

2. Verfahren nach Anspruch 1, **dadurch gekennzeichnet, dass** der Schritt des Einbringens des wenigstens einen Kerns folgenden Schritt aufweist:
Einbringen eines Faserkerns des wenigstens einen Kerns (2) in den Hohlraum (3) und anschließend Einbringen oder Einfüllen eines Polymers, insbesondere eines Harzes oder
Kunstharzes, in den Hohlraum (3) zum Verbinden des Polymers mit dem Faserkern.

3. Verfahren nach Anspruch 2, **dadurch gekennzeichnet, dass** der Schritt des Einbringens des wenigstens einen Kerns folgenden Schritt aufweist:
Verschließen der wenigstens einen Öffnung (10) mit dem Polymer oder Verschließen der wenigstens einen Öffnung (10) mittels Zuschweißen, Verkleben oder Zulöten.

4. Verfahren nach einem der vorhergehenden Ansprüche, **dadurch gekennzeichnet, dass** der Schritt des Ausbildens des Bauteils folgenden Schritt aufweist:
Ausbilden von mehreren Haken (6) an einer Innenwand (5, 9) des Bauteils (1), welche den Hohlraum (3) umgibt, mittels des generativen Fertigungsverfahrens.

5. Verfahren nach einem der vorhergehenden Ansprüche, **dadurch gekennzeichnet, dass** das Bauteil als ein Schaufelelement (1) und insbesondere als ein Verdichterschaufelelement ausgebildet ist.

6. Verfahren nach Anspruch 5, **gekennzeichnet durch**, Ausbilden des Schaufelelements (1) mit einem Schaufelfuß (7) mittels des generativen Fertigungsverfahrens, wobei der Schaufelfuß (7) insbesondere hohl ausgebildet ist und vorzugsweise die wenigstens eine Öffnung (10) aufweist.

7. Verfahren nach Anspruch 6, **gekennzeichnet durch** Ausbilden einer Innenwand (9) des Schaufelfußes (7) mit mehreren Haken (6) und Füllen des hohlen Schaufelfußes (7) mit wenigstens einem Kern (2) aus wenigstens einem Faserverbundwerkstoff.

8. Generativ bearbeitetes Bauteil (1), insbesondere ein Schaufelelement, wobei das Bauteil (1) wenigstens einen Hohlraum (3) aufweist, in welchem wenigstens ein Kern (2) aus wenigstens einem Faserverbundwerkstoff vorgesehen ist und wobei das Bauteil (1) wenigstens eine Öffnung (10) zum Einführen des wenigstens einen Kerns (2) in das Bauteil (1) aufweist.

9. Bauteil nach Anspruch 8, **dadurch gekennzeichnet, dass** eine Innenwand (5, 9) des Bauteils (1), welche den Hohlraum (3) bildet, mehrere Haken (6) zur zusätzlichen Verbindung von Kern (2) und Bauteil (1) aufweist.

10. Bauteil nach Anspruch 8 oder 9, **dadurch gekennzeichnet, dass** die Öffnung (10) durch den wenigstens einen Kern (2) oder mittels Zuschweißen, Zukleben oder Zulöten verschlossen ist.

11. Bauteil nach einem der Ansprüche 8 bis 10, **dadurch gekennzeichnet, dass** das Bauteil als ein Schaufelelement (1), insbesondere als ein Verdichterschaufelelement, ausgebildet ist.

12. Bauteil nach Anspruch 11, **dadurch gekennzeichnet, dass** das Schaufelelement (1) einen Schaufelfuß (7) aufweist, wobei der Schaufelfuß (7) insbesondere hohl und vorzugsweise mit dem Hohlraum (3) des Schaufelelements (1) verbunden ausgebildet ist.

13. Bauteil nach Anspruch 12, **dadurch gekennzeichnet, dass** der Schaufelfuß (7) mit wenigstens einem Kern aus wenigstens einem Faserverbundwerkstoff zumindest teilweise gefüllt ist und insbesondere an seiner Innenwand (9) Haken (6) aufweist.
